# EUROPÄISCHE PATENTANMELDUNG

(11) **EP 2 869 585 A1**
(43) Veröffentlichungstag der Anmeldung: **06.05.2015**
(21) Anmeldenummer: 13191096.0
(22) Anmeldetag: 31.10.2013
(51) Int. Cl.: H04N 21/426, H04N 21/443

(54) **System mit einem TV-Gerät und einer integrierten Gateway-Vorrichtung**

(71) Anmelder: Deutsche Telekom AG, 53113 Bonn (DE)
(72) Erfinder: Monath, Thomas, 23923 Schönberg (DE); Lange, Christoph, 10318 Berlin (DE)
(74) Vertreter: Vossius & Partner Patentanwälte Rechtsanwälte mbB

(57) **Zusammenfassung**

Die Erfindung betrifft ein System mit einem TV-Gerät und einer integrierten Gateway-Vorrichtung mit mindestens einer gemeinsamen Steuereinheit zum Betrieb des TV-Geräts und der Gateway-Vorrichtung.

Des Weiteren betrifft die Erfindung auch ein Verfahren zum Betrieb eines Systems mit einem TV-Gerät und einer integrierten Gateway-Vorrichtung, mit dem Schritt: Steuern des Systems mittels einer gemeinsamen Steuereinheit zum Betrieb des TV-Geräts und der Gateway-Vorrichtung.

## Beschreibung

Die Erfindung betrifft ein System mit einem TV-Gerät und einer integrierten Gateway-Vorrichtung mit mindestens einer gemeinsamen Steuereinheit zum Betrieb des TV-Geräts und der Gateway-Vorrichtung. Des Weiteren betrifft die Erfindung ein Verfahren zum Betrieb eines solchen Systems.

Allgemein bezieht sich die vorliegende Erfindung auf das Gebiet der Telekommunikation und betrifft speziell Netztechnik, die in Kundenlokation vorhanden beziehungsweise notwendig ist, um Internet- und Fernsehdienste empfangen und wiedergeben zu können.

Heutzutage wird ein Breitbandprodukt, zum Beispiel der Internetzugang, eines Netzbetreibers beziehungsweise eines Dienstanbieters im Telekommunikationsnetz erstellt und beim Kunden mittels eines Terminals als Übergabepunkt in der Regel in der Wohnung bereitgestellt. Dieser Übergabepunkt wird auch als Residential Gateway (RGW) bezeichnet. Das RGW verfügt typischerweise über geeignete technische Einrichtungen, um das Signal aus dem Betreiber-/Zugangsnetz empfangen zu können. Bei dem Betreiber-/Zugangsnetz kommt zum Beispiel der Standard Digital Subscriber Line (DSL) oder ein passives optisches Netz (PON) zum Einsatz. Das RGW weist darüber hinaus typischerweise auch Einrichtungen auf, um die empfangenen Signale in ein geeignetes Format zu übersetzen, damit die Signale im Heimnetz weiter genutzt und verarbeitet werden können. Ein Beispiel für ein solches Format ist Ethernet. Das RGW kann dabei typischerweise eine solche Einrichtung zum Übersetzen der Signale als integriertes Bauteil aufweisen. Alternativ kann eine solche Einrichtung, zum Beispiel ein DSL Modem oder ein sonstiges Modem, separat vorhanden sein und in Kommunikation mit dem RGW stehen. Neben dieser Grundfunktionalität des Netzanschlusses und der Signalumsetzung sind typische RGWs darüber hinaus in der Lage, die Zentralknoten des Kunden- beziehungsweise Heimnetzes mit Local-Area-Network- beziehungsweise Wireless-Local-Area-Network-Funktionalität bereit zu stellen. Darüber hinaus gibt es RGWs, die Telefonschnittstellen, zum Beispiel für VoIP, oder Anschlussmöglichkeiten für Drucker, Network Attached Storages (NAS), und/oder Spielekonsolen bereitstellen. Solche RGWs sind heute weit verbreitet und in vielen Haushalten zum Zweck des komfortablen Internetzuganges vorhanden.

Das RGW fungiert somit entsprechend dem Stand der Technik als Netzabschluss oder auch als Übergabepunkt zwischen dem Weitverkehresnetz (WAN) und dem lokalen Netz (LAN).

Darüber hinaus gibt es Fernsehgeräte (TV Geräte) als separate Geräte mit einer sehr großen Marktdurchdringung für den terrestrischen, kabelgebundenen oder Satellitenempfang von Fernsehprogrammen. Während ältere Fernsehgeräte rein für diesen Fernsehempfang konzipiert wurden, verfügen neuere Gerätegenerationen über Multimediafunktionen sowie über weitere Kommunikationsschnittstellen wie beispielsweise Ethernet oder USB (Universal Serial Bus). Aktuelle Geräte haben üblicherweise mehrere Empfänger für die obengenannten Empfangsmöglichkeiten integriert und verfügen über eigene Rechenleistungen durch eigene Recheneinrichtungen, beispielsweise Central Processing Units (CPU), zum Teil auch mit mehreren Rechenkernen, beispielsweise duale oder sogar Vierkern-CPU. Somit sind solche Fernsehgeräte in der Lage, beispielsweise als moderne Kommunikationsschnittstellen etwa für Videokonferenzen wie zum Beispiel Skype in Verbindung mit weiteren Kommunikationsschnittstellen wie zum Beispiel LAN/WLAN zu fungieren.

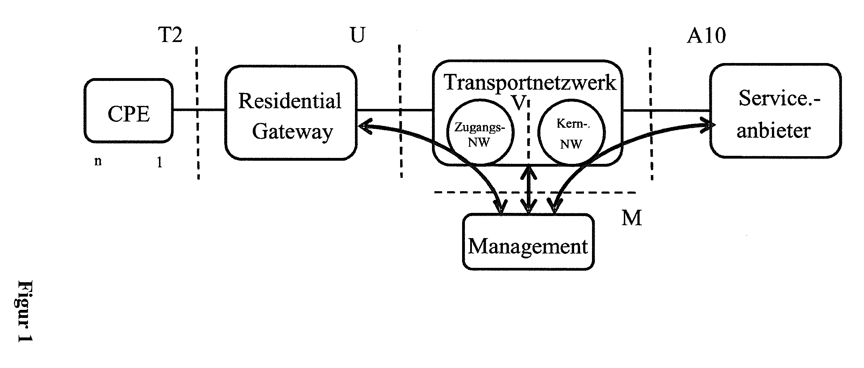

Realisierungen für heutige beziehungsweise zukünftige RGWs werden beispielsweise in den Referenzen [1] bis [3] offenbart. So definiert beispielsweise Referenz [2] funktional die Telekommunikationsnetzgeneration der Zukunft (NGN). Auch Referenz [3] zeigt ein Residential Gateway in einem Netzreferenzmodell und die definierten Schnittstellen aus den Referenzen [3] und [4] im Kontext der gesamten Netzumgebung. Dies ist beispielhaft in Figur 1 gezeigt.

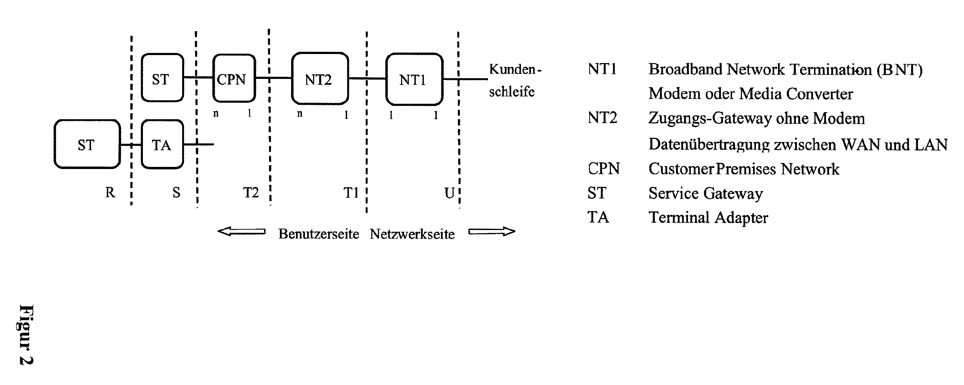

Figur 2 zeigt das Kundenreferenznetz mit zwei wesentlichen RGW-Komponenten NT1 (NT: Network Termination) und NT2. In Referenz [3] wurde das RGW als NT2 mit den optionalen Komponenten Modem, zum Beispiel DSL oder DOCSIS, Mediaconverter, zum Beispiel Glasfaser konvertiert zu Kupfer-Doppelader (NT1), Terminaladapter, zum Beispiel Schnittstelle zum eigentlichen Ausgabegerät (TA), und Servicegateway, zum Beispiel Set-top-Box (ST), definiert. Dabei kann der NT2 den Datentransfer sowohl im Brückenmodus (OSI Layer 2 bridged) oder als Router (OSI Layer 3) oder auch in Kombination ausführen.

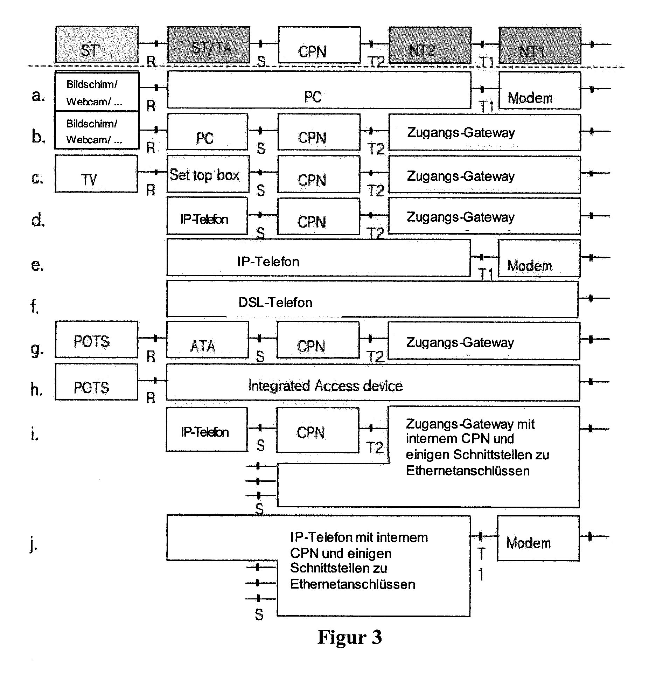

Des Weiteren werden in Referenz [3] mögliche RGW-Implementierungen auf Basis des funktionalen Referenzmodells inklusive Implementierungsbeispielen definiert, wie anhand von Figur 3 ersichtlich ist. So zeigt Figur 3 folgende möglichen RGW-Implementierungen:
a) Personal Computer (PC), direkt verbunden mit einem Modem über Ethernet,
b) PC, verbunden mit einem Zugangs-Gateway über ein CPN (customer premises network),
c) TV und Set-top-Box, verbunden mit einem Zugangs-Gateway über ein CPN,
d) IP-Telefon, verbunden mit einem Zugangs-Gateway über ein CPN,
e) IP-Telefon, direkt verbunden mit einem Modem über Ethernet,
f) DSL-Telefon auf der xDSL-Leitung,
g) POTS-(Plain old telephone service)-Gerät, verbunden mit einem Analogue Terminal Adapter (ATA),
h) POTS-Gerät, verbunden mit einem Integrated Access Device (IAD),
i) Zugangs-Gateway mit mehreren Ausgängen zum Residential-Netzwerk, einer davon verbunden mit einem CPN; einige Heimgeräte sind direkt mit dem Zugangs-Gateway verbunden, andere, z.B. ein IP-Telefon, sind mit dem CPN verbunden, und
j) IP-Telefon mit erweiterten Möglichkeiten, direkt verbunden mit einem Modem über Ethernet und mit mehreren Ausgängen; einige andere Heimgeräte können direkt mit dem IP-Telefon verbunden werden.

Die in Figur 3 gezeigten Bezeichnungen R, S, T1, T2 und U bezeichnen Schnittstellen, die so im DSL-Forum TR-058 standardisiert worden sind (siehe auch Referenz [6]).

Nachteilig bei Residential Gateways des Standes der Technik ist, dass die Programmierung solcher Residential Gateways von Kunden oft als schwierig empfunden wird und die Programmierung dabei meist nur mit Hilfe proprietärer und speziell zugeschnittener Software des jeweiligen Anbieters erfolgen kann, beispielsweise über den Browser eines mit dem Residential Gateway verbundenen Rechners.

Darüber hinaus ist es im Interesse der Netzbetreiber, immer mehr zum Teil auch komplexe Funktionen auf dem Residential Gateway zu integrieren bzw. zu implementieren, wie beispielsweise eine wesentlich höhere Speicherkapazität, um die Übertragungen großer Daten besonders für Cloud-Anwendungen zu erleichtern bzw. überhaupt erst zu ermöglichen. Auch ist es im Interesse der Netzbetreiber, wenn der Kunde Inhalte proaktiv über begrenzte Breitbandverbindungen anruft, die dann schnell den weiteren Nutzern bzw. den weiteren Endgeräten im lokalen Netz zur Verfügung stehen. In diesem Zusammenhang wird das so genannte Content Delivery Network (CDN) in Referenz [5] beschrieben.

Der Erfindung liegt die Aufgabe zugrunde ein System mit einem TV-Gerät und einer integrierten Gateway-Vorrichtung mit mindestens einer gemeinsamen Steuereinheit zum Betrieb des TV-Geräts und der Gateway-Vorrichtung bereitzustellen. Des Weiteren liegt der Erfindung die Aufgabe zugrunde, ein Verfahren zum Betrieb eines solchen Systems bereitzustellen.

Diese Aufgabe wird mit einem System bzw. einem Verfahren gemäß den unabhängigen Patentansprüchen gelöst. Abhängige Ansprüche beziehen sich auf bevorzugte Ausführungsformen.

Die Erfindung geht dabei von dem Grundgedanken aus, dass sowohl Gateway-Vorrichtungen wie beispielsweise Residential Gateways als auch TV-Geräte typischerweise in Haushalten vorhanden sind und auch benötigt werden, aber als separate Geräte parallel betrieben werden. Vom Standpunkt der gemeinsamen effizienten Ressourcennutzung aus und dem Wunsch der Kunden nach kompakteren technischen Geräten beziehungsweise einer Reduzierung der Anzahl technischer Geräte in Wohnungen und Haushalten entsprechend, wird erfindungsgemäß ein System mit einem TV-Gerät und mit einer integrierten Gateway-Vorrichtung bereitgestellt, welches sowohl Gateway-Funktionen als auch Funktionen eines TV-Gerätes umfasst. Durch ein solches System reduziert sich die Anzahl der Geräte im Heimnetz beziehungsweise im Haushalt und ein solches System kann vereinfacht, ohne zusätzliche Rechner und/oder Kommunikationsgeräte, über den TV-Bildschirm und einem entsprechenden Eingabegerät, beispielsweise eine Fernbedienung, programmiert werden. Des Weiteren ergibt sich in einem solchen System die synergistische Nutzung einer gemeinsamen Speichereinrichtung des Systems beziehungsweise des TV-Geräts und der Gateway-Vorrichtung, und einer gemeinsamen Steuereinheit zum Betrieb des TV-Geräts und der Gateway-Vorrichtung, beispielsweise einen entsprechenden gemeinsamen Prozessor aufweisend. Des Weiteren kann für ein solches System ein einzelnes gemeinsames Gehäuse verwendet werden. Die durch diese Verwendung entstehenden Kostenvorteile können somit an den Kunden weitergegeben werden. Durch die synergistische Nutzung gemeinsamer Bauteile beziehungsweise Einrichtungen wird somit ein energie- und ressourceneffizienter Betrieb ermöglicht.

Die Erfindung betrifft ein System mit einem TV-Gerät und einer integrierten Gateway-Vorrichtung mit mindestens einer gemeinsamen Steuereinheit zum Betrieb des TV-Geräts und der Gateway-Vorrichtung.

Eine gemeinsame Steuereinheit kann einen Prozessor, vorzugsweise einen Mehrkernprozessor aufweisen. Des Weiteren kann eine gemeinsame Steuereinheit einen Arbeitsspeicher sowie einen Massenspeicher und entsprechende Kontroller aufweisen. Die gemeinsame Steuereinheit kann eine entsprechende Betriebssoftware aufweisen, die geeignet ist, sowohl das TV-Gerät als auch die Gateway-Vorrichtung zu steuern.

Eine Gateway-Vorrichtung kann beispielsweise ein eingangs beschriebenes Residential Gateway sein. Eine Gateway-Vorrichtung kann insbesondere ein lokales Netz (Local-Area-Network - LAN) errichten und betreiben. Alternativ oder zusätzlich kann eine Gateway-Vorrichtung ein schnurloses lokales Netz (Wireless Local-Area-Network - WLAN) errichten und betreiben. Des Weiteren kann die Gateway-Vorrichtung mindestens eine Telefonschnittstelle, vorzugsweise für VoIP, mindestens eine Anschlussmöglichkeit für einen Drucker, mindestens eine Anschlussmöglichkeit für einen Netzwerkspeicher (Network Attached Storage - NAS), und/oder mindestens eine Anschlussmöglichkeit für eine Spielekonsole aufweisen. Des Weiteren kann die Gateway-Vorrichtung mindestens eine Managementfunktion aufweisen, beispielsweise das automatische Konfigurieren. Ein Beispiel für das automatische Konfigurieren ist das CPE WAN Management Protocol (CWMP), wie in Referenz [6] beschrieben, oder das Anpassen an die jeweiligen betrieblichen Parameter des jeweiligen Netzbetreibers. Die Gateway-Vorrichtung kann insbesondere einen Router und/oder einen Switch aufweisen. Des Weiteren kann die Gateway-Vorrichtung einen Zugangspunkt für ein schnurloses Heimnetz aufweisen, einen sogenannten WLAN-Access-Point. Auch kann die Gateway-Vorrichtung dazu geeignet sein mit einem oder mehreren Benutzerendgerät(e) über Kabel oder kabellos, bspw. per Funk, verbunden zu sein. Benutzerendgeräte können Rechner, Personal Computer, Laptops, Tablets oder Smartphones sein.

Das TV-Gerät kann mindestens eine Einrichtung zum Empfangen und zum Verarbeiten von kabelgebundenen, terrestrischen, und/oder Satelliten-TV-Signalen aufweisen. Des Weiteren kann das TV-Gerät eine Einrichtung zum Verarbeiten von TV-Signalen, die über ein entsprechendes Protokoll, zum Beispiel das Internetprotokoll (IP) über das Weitverkehrsnetz (WAN) empfangen werden, aufweisen. So können die TV-Signale von der Gateway-Vorrichtung von dem Weitverkehrsnetz empfangen und an das TV-Gerät übermittelt werden. Auch kann das TV-Gerät eine Einrichtung zum Ausgeben empfangener und eventuell entsprechend verarbeiteter Audiosignale und/oder visuellen Signalen aufweisen. So können beispielsweise die TV-Signale oder von anderen Vorrichtungen empfangene audio-/visuelle Signale an eine entsprechende Ausgabeeinheit oder mehrere Ausgabeeinheiten ausgegeben.

Gemäß einer Ausführungsform weist das System einen Netzabschluss, vorzugsweise ein Modem, auf, wobei der Netzabschluss als separates Gerät ausgeführt ist, das mittels einer Kabel- oder Funkverbindung angeschlossen ist.

Das Modem stellt eine Kommunikationsschnittstelle zwischen dem Weit-Verkehrsnetz (WAN) des Netzbetreibers und dem lokalen Netz (LAN), welches von der Gateway-Vorrichtung bereitgestellt und betrieben wird, dar. Ein solches Modem kann beispielsweise die Modulation beziehungsweise Demodulation von Signalen im Standard Digital Subscriber Line (DSL) oder die Modulation/Demodulation von Signalen für ein passives optisches Netz (PON) durchführen. Im Falle eines Anschlusses des Modems an das aus dem TV-Gerät und der integrierten Gateway-Vorrichtung bestehende System mittels einer Funkverbindung kann ein geeignetes Übertragungsprotokoll, wie zum Beispiel Bluetooth oder IEEE-802.11x verwendet werden. Alternativ kann auch ein Anschluss mittels einer optischen Verbindung wie zum Beispiel IrDA erfolgen.

Gemäß einer weiteren Ausführungsform kann der Netzabschluss, vorzugsweise ein Modem, auch als integriertes Bauteil in dem System, vorzugsweise in der Gateway-Vorrichtung, ausgeführt sein.

Gemäß einer weiteren Ausführungsform weist das System eine Set-top-Box auf, wobei die Set-top-Box als separates Gerät ausgeführt ist, das mittels einer Kabel- und/oder Funkverbindung angeschlossen ist.

Eine Set-top-Box kann beispielsweise ein Mediareceiver zur Wiedergabe von Filmen beziehungsweise Filmpaketen eines Video-on-Demand Angebots (z.B. Videoload) oder zur Wiedergabe von IP-Live-TV- oder Video-Streaming-Angeboten sein.

Eine Set-top-Box kann beispielsweise dazu geeignet sein, Inhalte des Weitverkehrsnetzes zu betrachten und zu nutzen. So können beispielsweise elektronische Mitteilungen, bspw. E-Mails, erstellt, bearbeitet und empfangen werden oder Internetinhalte, wie bspw. Websites oder Internetvideos, betrachtet werden.

Gemäß einer weiteren Ausführungsform kann die Set-top-Box auch als integriertes Bauteil in dem System, vorzugsweise in dem TV-Gerät, ausgeführt sein.

Gemäß einer weiteren Ausführungsform weist das System eine gemeinsame Eingabeeinheit und/oder eine gemeinsame Ausgabeeinheit auf. Die gemeinsame Ausgabeeinheit ist vorzugsweise ein gemeinsamer Bildschirm.

Eine gemeinsame Eingabeeinheit kann beispielsweise eine Fernbedienung oder eine Tastatur sein, wobei die Fernbedienung und/oder die Tastatur vorzugsweise kabellos mit dem restlichen System in Verbindung stehen. Die Signalübertragungen von/zu der Eingabeeinheit können über Funk oder mit optischen Mitteln erfolgen. Auch kann die Eingabeeinheit in das Gehäuse des Systems integriert sein.

Gemäß einer weiteren Ausführungsform weist das System eine gemeinsame Speichereinheit auf. Eine solche gemeinsame Speichereinheit kann eine gemeinsame Betriebssoftware zum Steuern mehrerer Vorrichtungen des Systems aufweisen.

Gemäß einer weiteren Ausführungsform weist das System eine Vorrichtung zum Konfigurieren mindestens der Gateway-Vorrichtung und/oder des TV-Gerätes auf. Die Vorrichtung zum Konfigurieren mindestens der Gateway-Vorrichtung und/oder des TV Gerätes kann auch in der Steuereinheit integriert sein. Das Konfigurieren kann durch die gemeinsame Betriebssoftware und/oder Benutzereingaben in die gemeinsame Betriebssoftware stattfinden.

Die Vorrichtung zum Konfigurieren der Gateway-Vorrichtung und/oder des TV Gerätes kann vorzugsweise auch geeignet sein, in einem gemeinsamen User Interface beziehungsweise in zwei separaten User Interfaces die Gateway-Vorrichtung und das TV-Gerät zu konfigurieren. Das User Interface beziehungsweise die User Interfaces können dabei auf der gemeinsamen Ausgabeeinheit des Systems, z.B. auf dem gemeinsamen Bildschirm, dargestellt werden. Dabei kann die gemeinsame Eingabeeinheit dazu genutzt werden, das Konfigurieren beziehungsweise das Einstellen mindestens des TV Gerätes und/oder der Gateway-Vorrichtung über entsprechende Eingabebefehle des Benutzers durchzuführen.

Gemäß einer weiteren Ausführungsform weist das System eine Vorrichtung zum Bereitstellen mindestens einer qualitätsdifferenzierenden Funktion, vorzugsweise für die parallele Unterstützung unterschiedlicher Dienstklassen wie Web, Sprache, Video, auf.

Die Erfindung betrifft auch ein Verfahren zum Betrieb eines Systems, vorzugsweise eines der vorstehenden Systeme, mit einem TV-Gerät und einer integrierten Gateway-Vorrichtung, mit dem Schritt: Steuern des Systems mittels einer gemeinsamen Steuereinheit zum Betrieb des TV-Geräts und der Gateway-Vorrichtung.

Gemäß einer Ausführungsform weist das Verfahren weiter die Schritten auf: Ein- und Ausschalten und/oder Betreiben des TV-Geräts, der Gateway-Vorrichtung und der weiteren Vorrichtungen des Systems in Gruppen oder einzeln, in Abhängigkeit von dem Bedarf eines Nutzers.

Gemäß einer weiteren Ausführungsform wird die Betriebssoftware eines Systems mit einem TV-Gerät und einer integrierten Gateway-Vorrichtung und/oder die Software zum Konfigurieren eines solchen Systems, vorzugsweise eines der vorstehenden Systeme, über eine Verbindung zu einer zentralen Netzspeichereinrichtung eines Netzbetreibers aktualisiert.

Durch die vorliegende Erfindung kann ein System mit einem TV-Gerät und mindestens einer Gateway-Vorrichtung mit hoher Rechenleistung und hoher Speicherkapazität bereitgestellt werden, wobei durch die gemeinsame Nutzung der Rechenleistung als auch der Speicherkapazität sich ein vergleichsweise niedriger Preis für den Endverbraucher ergibt. Des Weiteren werden die Anzahl der Geräte in einem Heimnetz reduziert und das System, insbesondere die Gateway-Vorrichtung kann ohne einen zusätzlichen Rechner über die vorhandene Ein- bzw. Ausgabeeinheit programmiert werden. Auf der Seite des Netzbetreibers ergeben sich durch das erfindungsgemäße System neue Entwicklungsmöglichkeiten hinsichtlich der Kooperation mit traditionellen Fernsehgeräteherstellern.

### Referenzen:

[1] http://www.homegatewayinitiative.org, insbesondere
   http://www.homegatewayinitiative.org/documents/docs/HGI_white_paper.pdf
[2] TISPAN: ETSI ES 282 001 Vl.1.1: "Telecommunications and Internet converged Services and Protocols for Advanced Networking (TISPAN); NGN Functional Architecture Release 1" (2005)
[3] MUSE: Multi Service Access Everywhere. Internet (2006): http://www.istmuse.org/,
[4] A. De Smedt, H. Balemans, F. Valera, A. Nikolaidis: "Modelling of the Residential Gateway"; Broadband Europe 2005, Bordeaux, France December 12-15, 2005;
[5] F.T.H. den Hartog, B.L.G. Bastiaans, M.A. Blom, M.G.M. Pluijmaekers, TNO Telecom; R.D. van der Mei, Center for Mathematics and Computer Science; "The use of Residential Gateways in Content Delivery Networking"; http://www.few.vu.nl/-mei/articles/2004/ATNAC/art.pdf; 2004;
[6] http://www.broadband-forum.org/; und IST - 6th FP MUSE project, Contract N° 507295, Deliverable TF3.2: "DETAILED DE-SCRIPTION OF RESIDENTIAL GATEWAY AND ADVANCED FEATURES", www.ist-muse.org/Deliverables/TF3/MUSE_DTF3.2_V16.pdf

Die Erfindung wird nachstehend anhand von Beispielen und der Zeichnung näher erläutert. Es zeigen:
Figur 1 eine schematische Darstellung eines Residential Gateway gemäß des MUSE Netz Referenzmodell aus Referenz [3] und die definierten Schnittstellen im Kontext der gesamten Netzumgebung,
Figur 2 eine schematische Darstellung eines Kunden-Referenznetzmodells gemäß Referenz [3],
Figur 3 eine schematische Darstellung von Residential Gateway Implementierungen auf Basis des funktionalen Referenzmodells gemäß Referenz [4] und Implementierungsbeispiele,
Figur 4 eine schematische Darstellung eines Systems mit einem TV-Gerät und einer integrierten Gateway-Vorrichtung gemäß einer Ausführungsform der Erfindung,
Figur 5 eine schematische Darstellung eines Systems mit einem TV-Gerät und einer integrierten Gateway-Vorrichtung gemäß einer weiteren Ausführungsform der Erfindung,
Figur 6 eine schematische Darstellung eines Systems mit einem TV-Gerät und einer integrierten Gateway-Vorrichtung gemäß einer weiteren Ausführungsform der Erfindung,
Figur 7 eine schematische Darstellung eines Systems mit einem TV-Gerät und einer integrierten Gateway-Vorrichtung gemäß einer weiteren Ausführungsform der Erfindung, und
Figur 8 eine schematische Darstellung mehrerer Systeme mit einem TV-Gerät und einer integrierten Gateway-Vorrichtung gemäß weiteren Ausführungsformen der Erfindung.

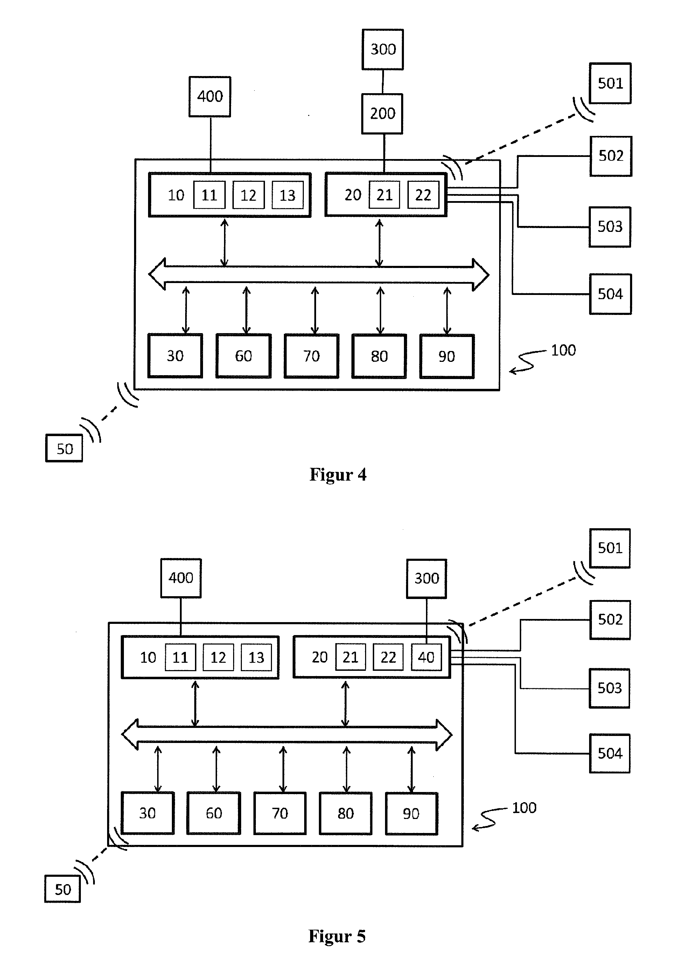

Figur 4 zeigt eine schematische Darstellung eines Systems 100 mit einem TV-Gerät 10 und einer integrierten Gateway-Vorrichtung 20 gemäß einer Ausführungsform der Erfindung. In dieser Ausführungsform weist das Gerät 100 zusätzlich zu dem TV-Gerät 10 und der Gateway-Vorrichtung 20 eine Steuereinheit 30, eine Eingabeeinheit 50, eine Ausgabeeinheit 60, eine gemeinsame Speichereinheit 70, eine gemeinsame Konfigurationsvorrichtung 80 sowie eine Vorrichtung 90 zum Bereitstellen qualitätsdifferenzierender Funktionen (QoS-Funktionen) auf.

In der Ausführungsform weist das TV-Gerät 10 eine Einrichtung 11 zum Empfangen und zum Verarbeiten von kabelgebundenen und/oder terrestrischen, und/oder Satelliten-TV-Signalen auf. Des Weiteren weist das TV-Gerät 10 eine Einrichtung 12 zum Verarbeiten von TV-Signalen, die über ein entsprechendes Protokoll, zum Beispiel das Internetprotokoll (IP) über das Weitverkehrsnetz (WAN) empfangen wurden und von der Gateway-Vorrichtung 20 an das TV-Gerät 10 übermittelt wurden. Auch weist das TV-Gerät 10 eine Einrichtung 13 zum Ausgeben der empfangenen und verarbeiteten Audiosignalen und visuellen Signalen auf. Die verarbeiteten visuellen Signale werden an die Ausgabeeinheit 60 übermittelt, die Audiosignale dementsprechend an eine Ausgabeeinheit, die geeignet ist Audiosignale wiederzugeben (nicht gezeigt).

Die Ausgabeeinheit 60 ist in dem vorliegenden Fall ein Flüssigkristall-Bildschirm (LCD). Gemäß der vorliegenden Erfindung sind allerdings auch insbesondere andere Arten von Bildschirmen, wie beispielsweise Plasmabildschirme, LED-Bildschirme oder auch Röhrenmonitore als Ausgabeeinheit geeignet. Ebenso können Projektoren wie Beamer als Ausgabeeinheit eingesetzt werden.

In der vorliegenden Ausführungsform weist die Gateway-Vorrichtung 20 einen Router und/oder einen Switch 21 sowie einen Zugangspunkt 22 für ein schnurloses Heimnetz (WLAN-Access-Point). Dementsprechend sind an die Gateway-Vorrichtung 20 in dem gezeigten Ausführungsbeispiel mehrere Benutzerendgeräte 502 bis 504, vorliegend Personal Computer, über Kabel verbunden. Des Weiteren ist ein Benutzerendgerät 501, vorliegend ein Smartphone über Funk mittels der Vorrichtung 22 mit der Gateway-Vorrichtung 20 verbunden.

Das TV-Gerät 10 ist mit einem Anschluss 400 verbunden, wobei der Anschluss 400 geeignet ist TV-Signale, die kabelgebunden, terrestrisch oder über Satelliten übertragen werden an das TV-Gerät 10 zu übermitteln. Die Gateway-Vorrichtung 20 ist an ein Modem 200 angeschlossen, welches einen entsprechenden Netzabschluss darstellt, wobei das Modem wiederum mit einem Weitverkehrsnetzanschluss 300 verbunden ist. Das Weitverkehrsnetz ist in dem vorliegen Fall das Internet. Alternativ oder zusätzlich kann das TV-Gerät TV-Signale über die Gateway-Vorrichtung 20 empfangen. Weiterhin kann die Gateway-Vorrichtung z.B. mit dem Kabelanschluss verbunden sein.

Die Steuereinheit 30 ist geeignet für die Bedienung, Einrichtung und den Betrieb des Systems 100. So kann die Steuereinheit einzelne Vorrichtungen bzw. Geräte des Systems 100 Ein- und Ausschalten und auch entsprechend Betreiben, je nach den jeweiligen Bedürfnissen des Nutzers des Systems 100. So ist es beispielsweise möglich, dass ein Nutzer nur das TV-Gerät 10 auf klassische Weise zum Anschauen von TV-Programmen benutzen möchte, jedoch zu diesem Zeitpunkt die Verwendung bzw. Betrieb der Gateway-Vorrichtung 20 oder anderer Vorrichtungen bzw. Geräte des Systems 100 nicht wünscht. Das Steuergerät 30 schaltet dementsprechend das TV-Gerät 10 an und steuert dessen Eigenschaften entsprechend. Die Gateway-Vorrichtung 20 wird allerdings nicht angeschaltet oder sogar komplett deaktiviert. Andererseits ist es auch möglich, dass ein Nutzer nur Funktionen der Gateway-Vorrichtung benötigt, beispielsweise um mit einem an die Gateway-Vorrichtung angeschlossenen Nutzer-Endgerät eine Verbindung zu dem Internet aufzubauen. Ein solches Nutzer-Endgerät kann beispielsweise ein per Funk an die Gateway-Vorrichtung 20 angeschlossenes Smartphone 501 sein.

Des Weiteren weist das System 100 eine Eingabeeinheit oder Bedieneinheit 50 auf, die im vorliegenden Ausführungsbeispiel schnurlos per Infrarot Datenübertragung mit dem System 100 verbunden ist. Somit kann der Nutzer des Systems 100 verschiedene Funktionen und Vorrichtungen des Systems 100 über die Eingabeeinheit 50 steuern und kontrollieren, vorzugsweise die Steuereinheit 30. Des Weiteren kann der Nutzer des Systems 100 die Eingabeeinheit 50 auch dazu verwenden, die Konfigurationsvorrichtung entsprechend zu bedienen und die einzelnen Funktionen und Programme des Systems 100 entsprechend zu programmieren. Diese Programmierung mit Hilfe der Eingabeeinheit 50 und der Konfigurationsvorrichtung 70 kann unter Verwendung eines graphischen User-Interfaces erfolgen, welches auf der Ausgabeeinheit 60 ausgegeben wird. In dem vorliegenden Fall kann ohne einen zusätzlichen Rechner, der an das System 100 angeschlossen ist bzw. angeschlossen werden müsste, das System betrieben oder konfiguriert werden.

Die gemeinsame Speichereinheit 70 weist in dem vorliegenden Ausführungsbeispiel die zum Steuern bzw. zum Betrieb des Systems 100 benötigte Betriebs- bzw. Steuersoftware auf, die entsprechend von der Steuereinheit 30 verwendet wird. Des Weiteren ist die gemeinsame Speichereinheit dazu geeignet, auch große Datenmengen insbesondere für Cloud-Anwendungen zu speichern. Darüber hinaus ist es möglich, auf der gemeinsamen Speichereinheit 70 Daten, die dem Heimnetzwerk zur Verfügung gestellt werden sollen zu speichern. Dadurch kann ein entsprechendes Content-Delivery-Network (CDN), wie in Referenz [5] beschrieben, bereitgestellt werden. Auch können in der gemeinsamen Speichereinheit 70 Mediadaten, die beispielsweise von Videoportalen runtergeladen wurden, gespeichert werden.

Des Weiteren weist das System 100 eine Vorrichtung 90 zum Bereitstellen mindestens einer qualitätsdifferenzierenden Funktion auf. Solche qualitätsdifferenzierenden Funktionen werden allgemein als Quality of Service (QoS) Funktion bezeichnet. Ein Beispiel für solche Funktionen ist, dass Echtzeitdienste zum Beispiel Telefonie oder Video bevorzugt gegenüber "normalem" Internetverkehr, zum Beispiel E-Mail Verkehr und/oder im Internet surfen, übertragen werden.

In dem vorliegenden Ausführungsbeispiel sind alle Vorrichtungen bzw. Geräte des Systems 100 über einen gemeinsamen Bus miteinander verbunden über den die Steuerung der Geräte und/oder der Datenaustausch zwischen den Geräten erfolgen kann. Insbesondere kann dadurch die Steuereinheit 30 alle Vorrichtungen bzw. Geräte des Systems 100 steuern bzw. auf diese zugreifen.

Figur 5 zeigt eine schematische Darstellung eines Systems 100 mit einem TV-Gerät 10 und einer integrierten Gateway-Vorrichtung 20 gemäß einer weiteren Ausführungsform der Erfindung. Der Unterschied zu der Ausführungsform von Figur 4 ist, dass ein Netzabschluss, vorliegend ein Modem 40, direkt in das System 100 integriert ist. In dem gezeigten Ausführungsbeispiel ist das Modem 40 in die Gateway-Vorrichtung 20 integriert. Wie in dem in Figur 4 gezeigten Ausführungsbeispiel ist auch das Modem 40 mit dem Weitverkehrsanschluss 300 verbunden. In diesem Zusammenhang ist darauf hinzuweisen, dass erfindungsgemäß die Verbindung zwischen Modem 40 und Weitverkehrsanschluss 300 bzw. zwischen Gateway-Vorrichtung 20 und/oder System 100 mit dem Modem 200 sowohl kabelgebunden als auch kabellos beispielsweise über Funk erfolgen kann.

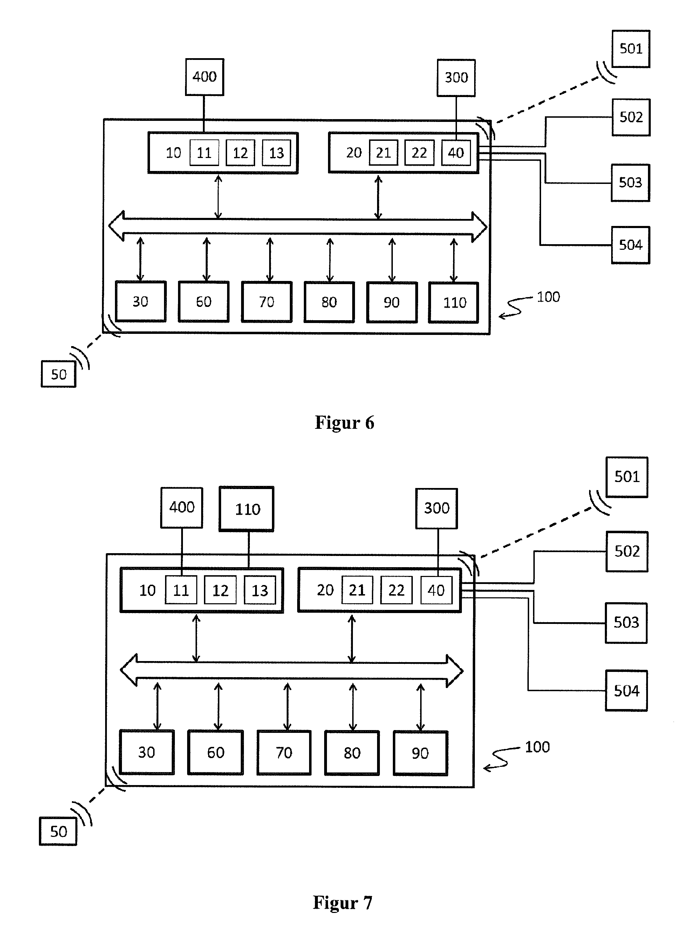

Figur 6 zeigt eine schematische Darstellung eines Systems 100 mit einem TV-Gerät 10 und einer integrierten Gateway-Vorrichtung 20 gemäß einer weiteren Ausführungsform der Erfindung. Der Unterschied zu der in Figur 5 gezeigten Ausführungsform ist, dass das System 100 zusätzlich eine integrierte Set-top-Box 110 aufweist. Die integrierte Set-top-Box 110 der vorliegenden Ausführungsform weist einen Media-Receiver zur Wiedergabe von Filmen bzw. Filmpaketen von Video-on-Demand-Angeboten, wie beispielsweise Videoload auf. Des Weiteren ist die Set-top-Box 110 zur Wiedergabe von IP-Live-TV oder Video-Streaming-Angeboten geeignet. Auch kann mit der Set-top-Box 110 der vorliegenden Ausführungsform E-Mails erstellt, bearbeitet und empfangen werden, sowie durch einen geeigneten Browser Websites und Internetvideos betrachtet werden.

Figur 7 zeigt eine schematische Darstellung eines Systems 100 mit einem TV-Gerät 10 und einer integrierten Gateway-Vorrichtung 20 gemäß einer weiteren Ausführungsform der Erfindung.

Der Unterschied zu dem in Figur 6 gezeigten Ausführungsbeispiel ist, dass die Set-top-Box 110 nicht in das Gehäuse des Systems 100 integriert ist, sondern mit dem System 100 bzw. mit dem TV-Gerät 10 entsprechend verbunden ist. In diesem Zusammenhang ist es dem Fachmann klar, dass das System 100 und/oder das TV-Gerät 10 entsprechende Schnittstellen aufweist, beispielsweise ein High-Definition-Multimedia-Interface (HDMI), um die Set-Top-Box 110 mit den System 100 zu verbinden.

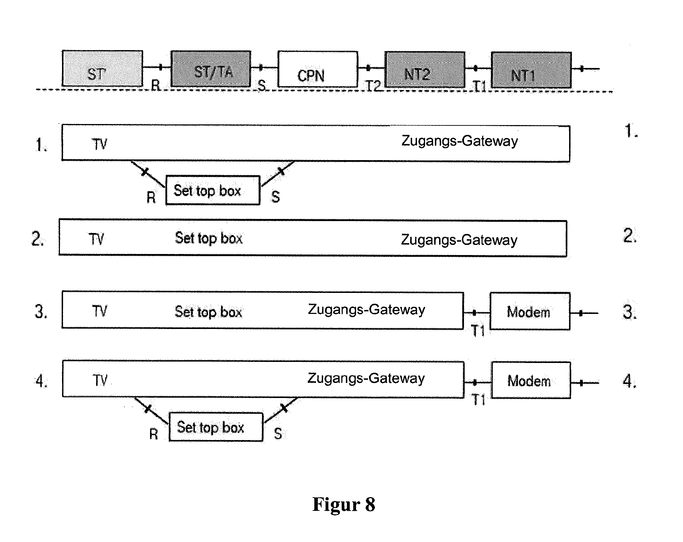

Figur 8 zeigt eine schematische Übersicht mehrerer Systeme mit einem TV-Gerät und einer integrierten Gateway-Vorrichtung gemäß weiteren Ausführungsformen der Erfindung. Auf Bezugszeichen wird in Figur 8 der Übersichtlichkeit halber verzichtet.

So wird unter 1. ein System mit einem TV-Gerät und einem Zugangsgateway mit integrierten Modem und einer separaten Set-top-Box gezeigt.

Unter 2. wird ein System mit einem TV-Gerät und einem Zugangsgateway mit integriertem Modem und einer in das System bzw. in das Gehäuse des Systems integrierten Set-top-Box gezeigt.

Unter 3. wird ein System mit einem TV-Gerät und einem Zugangsgateway und einer separaten Set-top-Box gezeigt. Der Zugangsgateway ist mit einem separaten Modem, welches ein Breitbandnetzabschluss darstellt, verbunden.

Unter 4. wird ein System mit einem TV-Gerät und einem Zugangsgateway und einer in das System bzw. in das Gehäuse des Systems integrierten Set-top-Box gezeigt. Der Zugangsgateway ist mit einem separaten Modem, welches ein Breitbandnetzabschluss darstellt, verbunden.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang und den Geist der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschließlich die in den Ansprüchen beziehungsweise in den Ausführungsbeispielen beschriebenen Merkmale umfasst sowie auch solche, die zusätzliche andere Merkmale umfassen.

## Patentansprüche

1. System mit einem TV-Gerät und einer integrierten Gateway-Vorrichtung mit mindestens einer gemeinsamen Steuereinheit zum Betrieb des TV-Geräts und der Gateway-Vorrichtung.

2. System nach Anspruch 1 mit einem Netzabschluss, vorzugsweise einem Modem, wobei der Netzabschluss als separates Gerät ausgeführt ist, das mittels einer Kabel- und/oder Funkverbindung angeschlossen ist.

3. System nach Anspruch 1 mit einem Netzabschluss, vorzugsweise einem Modem, wobei der Netzabschluss als integriertes Bauteil in dem System, vorzugsweise in der Gateway-Vorrichtung, ausgeführt ist.

4. System nach einem der Ansprüche 1 bis 3 mit einer Set-top-Box, wobei die Set-top-Box als separates Gerät ausgeführt ist, das mittels einer Kabel- und/oder Funkverbindung angeschlossen ist.

5. System nach einem der Ansprüche 1 bis 3 mit einer Set-top-Box, wobei die Set-top-Box als integriertes Bauteil in dem System, vorzugsweise in dem TV-Gerät, ausgeführt ist.

6. System nach einem der Ansprüche 1 bis 5 mit einer gemeinsamen Eingabeeinheit und/oder einer gemeinsamen Ausgabeeinheit, wobei die gemeinsame Ausgabeeinheit vorzugsweise ein gemeinsamer Bildschirm ist.

7. System nach einem der Ansprüche 1 bis 6 mit einer gemeinsamen Speichereinheit.

8. System nach einem der Ansprüche 1 bis 7 mit einer Vorrichtung zum Konfigurieren der Gateway-Vorrichtung und/oder des TV-Gerätes.

9. System nach einem der Ansprüche mit einer Vorrichtung zum Bereitstellen mindestens einer qualitätsdifferenzierenden Funktion, vorzugsweise für die parallele Unterstützung unterschiedlicher Dienstklassen.

10. Verfahren zum Betrieb eines Systems, vorzugsweise nach einem der Ansprüche 1 bis 9, mit einem TV-Gerät und einer integrierten Gateway-Vorrichtung, mit dem Schritt: Steuern des Systems mittels einer gemeinsamen Steuereinheit zum Betrieb des TV-Geräts und der Gateway-Vorrichtung.

11. Verfahren nach Anspruch 10, mit den Schritten:
Ein- und Ausschalten und/oder Betreiben des TV-Geräts, der Gateway-Vorrichtung und der weiteren Vorrichtungen des Systems in Gruppen oder einzeln, in Abhängigkeit von dem Bedarf eines Nutzers.

12. Verfahren nach Anspruch 10 oder 11, wobei die Betriebssoftware eines Systems mit einem TV-Gerät und einer integrierten Gateway-Vorrichtung und/oder die Software zum Konfigurieren eines solchen Systems, vorzugsweise nach einem der Ansprüche 1 bis 9, über eine Verbindung zu einer zentralen Netzspeichereinrichtung eines Netzbetreibers aktualisiert wird.
